# EUROPEAN PATENT APPLICATION

(11) **EP 1 624 126 A2**
(43) Date of publication of application: **08.02.2006**
(21) Application number: 05023299.0
(22) Date of filing: 06.08.1998
(51) Int. Cl.: E04C 2/292, E04D 3/30, E04H 5/10, E04D 3/362, E04C 2/08

(54) **Wall Panel**

(30) Priority: 07.08.1997 DE 19734256; 27.05.1998 FR 9806661
(62) Divisional of application: 01127579.9
(71) Applicant: SAINT-GOBAIN ISOVER, 92400 Courbevoie (FR)
(72) Inventor: Rüchel, Frank, 69221 Dossenheim (DE); Geissels, Alexander, 68542 Heddesheim (DE)
(74) Representative: Lermer, Christoph

(57) **Abstract**

A wall panel for a building facade in particular, made from wall panels arranged one on top of the other, preferably out of sheet steel with horizontally protruding panel webs, on whose free end protruding panel web flanges are provided for as well as insulation plates arranged therebetween, whose thickness preferably is greater than the horizontal extension of the panel webs and which are held by the panel web flanges, fixation of the insulation plates in the wall panel being effected by knife-like or claw-like engagement of the panel web flanges directly into the material of the insulation plate having no recesses in this area.

## Description

The present invention pertains to wall panels as described by the preamble of patent claim 1, particularly to casket-like wall panels.

When erecting industrial halls it is a common way of action to produce the facade of industrial halls out of steel panel sheets. These steel panel sheets, however, only have very low thermal insulation properties so that correspondingly erected facades of industrial halls have to be insulated by using additional thermal insulation materials. In the common way of action therein thermal insulation plates or similar thermal insulation materials, which as a rule consist of mineral wool, are disposed between the panel webs of the steel panel sheets out of which the facades of the industrial halls are constructed. Herein it turned out to be a problem that the panel webs themselves represent heat bridges of not unessential importance, which substantially worsen the total thermal value of the facade construction. Attempts were made to solve this problem e.g. by additional insulation materials in the area of the panel webs. However, it turned out that these additional insulation materials in the area of the panel webs cannot be fixed in correspondence with use and do not develop sufficient effect in terms of insulation technology. In addition, application of additional insulation materials in the area of the panel webs means an additional working operation, this increasing total costs for such facade of an industrial hall disadvantageously.

From the document DE-G 91 05 036 wall elements for industrial buildings in panel construction are known, in which insulation plates ready to be plastered can be inserted. For avoiding heat bridges in the area of the panel webs, the insulation plates in accordance with the above document are made thicker than the panels. The insulation plates in accordance with this document in addition cannot be compressed, because they must be capable of carrying outside plaster as well as of absorbing shear forces and wind suction forces. The insulation plates therein are provided with slot-shaped recesses with whose aid they are shifted over the panel webs. Moreover, the above-named document describes to provide flanges facing upwardly as well as downwardly, of the cross webs of the panel elements, which flanges engage with the slot-shaped recesses provided in the latter for fixation of the insulation elements. Apart from the fact that the formation of slot-shaped recesses in the insulation plates as well as provision of flanges facing downwardly, of the cross webs of the panel elements are extremely expensive in manufacture, this system is very hard to assemble due to the lacking compressibility of the insulation plates so that even mountable holding strips are provided for which are intended to facilitate handling of the insulation plates.

It is the object of the present invention to provide for a wall panel which permits simple assembly, can be manufactured economically and renders superfluous expensive holding members on the steel panel sheets which are built into the insulation plates.

This object is solved by the characterizing features of patent claim 1, advantageous embodiments being described by the characterizing features of the depending subclaims.

An insulated wall panel which can be equipped with insulation material in simple manner is provided for. For this purpose, a lath preferably facing downwardly, which directly engages with the insulation material plate and fixes the latter within the panel is provided for in the upper area of the horizontal panel web on the horizontal webs of the laths forming the panels or the panel plates. The outside facing of this industrial hall facade therein preferably consists of sheets with trapezoidal corrugations, which are screwed in the metal panels or are fixed in other suitable manner.

The thickness of the insulation material plates therein is greater than the horizontal extension of the panel webs.

In accordance with the present invention the insulation material plates to be arranged within the panels essentially are made compressible such that the portion respectively protruding over the horizontal extension of the panel webs, of each insulation material plate can be pressed and/or compressed when mounting the sheets with the trapezoidal corrugations on the metal panels, if required, direct contact between the metal of the trapezoidal surface and the metal of the panel sheets being done without, since the protruding part of the insulation plate covers the panel web, this thermally decoupling the inner sheet tray from the outside facing. The disadvantageous effect of heat and/or cold bridges, therefore, can be clearly reduced in simple and advantageous manner. The insulation material or wall panel plate, respectively, with excess thickness in accordance with the invention is free of prefabricated recesses. Rather is it provided that the downwardly facing panel web flanges in the respectively upper panel area or of the respectively upper panel plate like knives or claws fully engage with the material of the respective insulation material plate. Fixation of the insulation material plates in the panels therefore is effected in surprisingly simple and advantageous manner by a knife-like or claw-like engagement of the web flanges or, however, by engagement of spaced web flange members directly into the material of the insulation material mat with excess thickness. Thereby, the manufacturing expense for the insulation material plate with excess thickness can be reduced substantially, this resulting in clearly reduced total costs for facades for industrial halls, erected using such elements. Herein, it is advantageous to provide the insulation material plate which advantageously is made out of mineral wool, with a cut formed without removal of material and into which the panel engages in claw-like manner. Herein, it furthermore is advantageous to mark the position and/or presence, respectively, of the cut which being a separation cut only because of the material can be seen with the naked eye hardly or with difficulty only, by at least one marking line on at least the outer surface directed to the outer sheeting during assembly, of the mineral wool plate for facilitation of assembly. The marking line can be formed by burning by means of hot air nozzles.

In a modification of the present invention it is possible to provide for spacer profiles between the panel webs and the outside facing preferably consisting of sheets with trapezoidal corrugations, of the industrial hall facade, which spacer profiles e.g. can consist of a simple wooden lathing or, however, of profiles out of materials with low thermal conduction. With the aid of such spacer profiles it is possible to adjust compression of the insulation material plate with excess thickness to a desired value by the fixation of the outside sheeting preferably consisting of sheets with trapezoidal corrugations, of the industrial hall facade, or, however, completely avoiding it so that impairment of the insulation properties of the insulation material plate with excess thickness can be avoided. Such spacer profiles with a.o. offer the advantage that the fixation points for the outer tray of the industrial hall facade are visible and the insulation layer is not pressure-loaded, in dependence on the statics of the industrial hall facade can be provided on each individual panel web or, however, only on a given number of panel webs.

In a further modification of the present invention it is possible to form the insulation material plate with excess thickness as plate having areas of different density. Herein, the area of the insulation material plate with excess thickness, protruding externally over the panel webs is made from a material with higher bulking density, whereas the remaining part of the respective insulation material plate has lower solidity and/or bulking density. Solidity adjustment of the layer protruding externally over the panel webs, of the respective insulation material plate beside the increased bulking density in case of mineral wool plates can e.g. also be achieved by corresponding adjustment of the binder content and/or the fiber quality of the mineral wool material or by lamination of a planar formation of low thickness, like e.g. a glass mat or glass fabric or the like. The fixation function obtained by solidity adjustment therein is concentrated on the layer protruding externally over the panel webs, of the wall panel plates with excess thickness, wherein the remaining area of the insulation plates can be selected in correspondence with the actual demand profile with respect to thermal conductivity. Therein, it even is conceivable to reduce solidity adjustment to the areas of the insulation material plate with excess thickness, which are located in direct neighborship to the panel webs and in which fixation of outside sheeting of correspondingly constructed industrial hall facades occurs. The use of insulation plates of this kind, with areas of different density and/or solidity therein is conceivable with the use of the above-described spacer profiles or also without them. In a particularly advantageous embodiment, distance-defined fixation of the outside sheeting is effected using a special screw comprising two spaced threaded sections of different thickness, separated by a section without thread exerting the function of a stop.

Further advantages and features of the present invention result from the following description in connection with the attached drawing. In the drawing:
- Fig. 1: shows a partial cross-sectional view through a facade of an industrial hall out of steel panel sheets with insulation plates;
- Fig. 2: is a cross-sectional view through the industrial hall facade out of steel panel sheets of Fig. 1 with an outside sheeting mounted thereon;
- Fig. 3: is a cross-sectional view through another embodiment of the industrial hall facade out of steel panel sheets with insulation plates with different density areas;
- Fig. 4: is a cross-sectional view through the industrial hall facade our of steel panel sheets of Fig. 3 with an outside sheeting mounted thereon;
- Fig. 5: is a partial cross-sectional view through the industrial hall facade our of steel panel sheets of Fig. 5 with spacer elements between panel webs and outside sheeting;
- Fig. 6: is a detailed view of the panel web with spacer element of Fig. 5; and
- Fig. 7: is an isolated cross-sectional view of the spacer element of Figs. 5 and 6;
- Fig. 8: is a view of a detail of a further embodiment of the panel web with a special screw as spacer element;
- Figs. 9 and 10: are views of the special screw of Fig. 8.

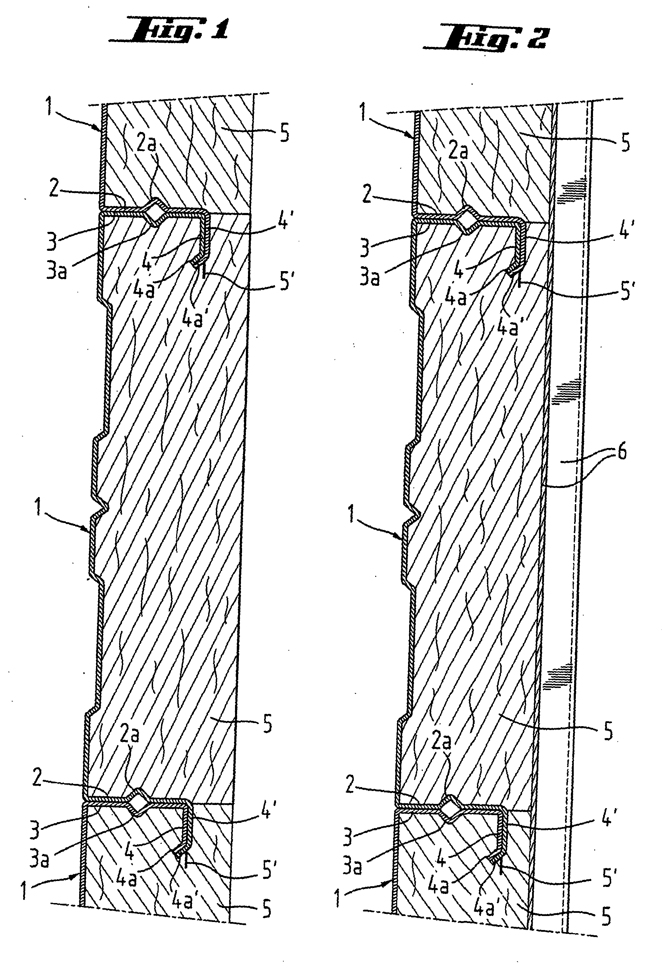

In Fig. 1 a partial cross-sectional view though a facade of an industrial hall is shown, which is built by steel panel sheets 1 arranged one on top of the other and which preferably extend between vertical support columns (not shown). Said steel panel sheets 1 at their lower end have a panel web 2 protruding horizontally in direction to the facade outside. In addition. said steel panel sheets 1 also at their upper end have a panel web 3 protruding horizontally in direction to the facade outside, on whose end on the facade outside a flange 4 preferably integrally protruding in vertical downward direction with the upper panel web 3 is provided for, which flange serves for engagement, as will be explained in more detail later, in the material of an insulation plate element in the manner of a claw. In the embodiment of Fig. 1 in addition a beveling or a bend 4a is provided for at the lower marginal edge of the vertical panel web flange 4. When, as intended in the described embodiment, panels disposed on above the other are to be held by mutual lapping, also on the lower panel rim a vertically protruding flange 4' is provided for, which here also has a beveling or bend 4a' of complementary shape to the flange 4 and the beveling 4a. In superposed position of the panel plates thus the lower panel rim with flange 4' and bend 4a' laps over flange 4 and bend 4a of the upper panel rim of the panel plate located therebelow. For this purpose the panel web 2 respectively is made longer by the thickness of the flange 4. In overlapping position the flange 4, 4' and bend 4a, 4a' act as claw-like engagement member into the material of the insulation material plate. Simultaneously the lapping secures the mutual hold of the superposed panels. In spite of the fact that the steel panel sheets 1 in the embodiment shown in Fig. 1 are represented as one-piece elements, it is of course also conceivable to provide for steel panels assembled of several elements instead, the very panel therein being formed by vertically spaced panel laths which respectively either are provided with the lower horizontal panel web 2 or the upper horizontal panel web 3 with the panel web flange 4 arranged thereon, wherein in case of mutual panel holding both webs 2 and 3 are provided with the flange 4, 4' and/or the bend 4a, 4a'. In further modification of the last described embodiment, it additionally is possible to provide for steel panel lath elements in which respectively a lower panel web 2 as well as an upper panel web 3 with panel web flange 4 disposed thereon are combined.

Respectively one insulation plate member 5, in the shown embodiment made out of compressible mineral wool material, is arranged within the panel formed by the steel panel sheets of the embodiment shown in Fig. 1. Herein, the insulation plates advantageously are tensioned between the panel webs with a certain excess width, such that no gaps are created in the area of contact and the plates do not fall down during assembly. As can also be taken from Fig. 1, the thickness of the respective insulation plate 5 is chosen to be larger than the depth or length, respectively, of the panel webs 2 and 3 which apart from that can be built as continuous lath or as spaced individual elements. Herein, the panel web flanges protruding vertically downwardly directly cut or claw, respectively, into the material of the insulation plates located between said panel webs 2 and 3 such that the panel webs 2 and 3 with their flanges 4, 4' to that extent acting as engagement knives claw themselves into the insulation material plate and hold the latter within the panel. The bends 4a, 4a' arranged on the lower marginal edge of the panel web flanges 4, 4' protruding vertically downwardly amplify the knife-like clawing and in addition cause a positive and non-positive engagement with the respective insulation material plate 5 such that safe fixation of the insulation material plates 5 within the steel panel sheets 1 is guaranteed.

In the sense of engagement control it herein is advantageous to provide the insulation material plate in this area with a cut 5', however, without removing material. The cut advantageously is produced by a rotating knife. Of course, the cut 5' in its depth is adapted to the engagement claw. As can further be taken from Fig. 1, the backsides of the steel panel sheets 1 are profiled for producing a higher surface stability. This is correspondingly true for the panel webs 2 and 3, each of which is provided with shapings 2a and 3a, respectively, protruding to the panel inside. Due to the compressible embodiment of the insulation material plates 5, those can adapt themselves to the profilings increasing surface stability of the steel panel sheets, without gaps being left, this however advamtageously being supported in that the cut with respect to its eccentrical arrangement is provided in such way that its distance to the outer surface of the insulation material plate which during assembly faces the steel panel sheet, is held in positive tolerance range. Thus an optimum insulating effect is achieved.

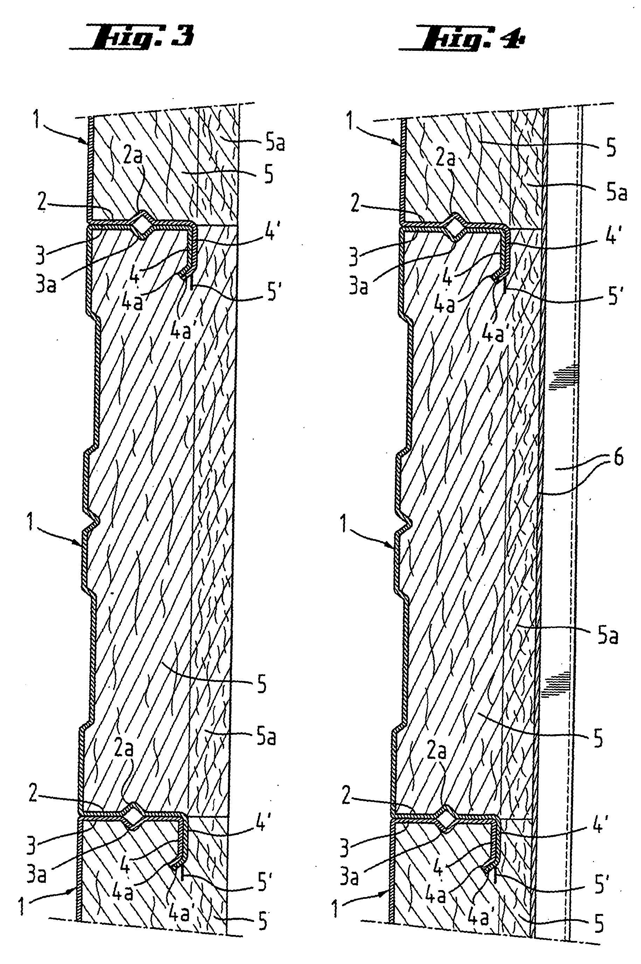

From Fig. 2 essentially the same elements can be taken, as have already been described with reference to Fig. 1. In addition, from Fig. 2 , however, an outside sheeting 6 can be taken which in the embodiment shown in Fig. 2 is built by sheets with trapezoidal corrugations. As can further be seen from Fig. 2, the area protruding outwardly over the vertical panel web plates, of the insulation material plates 5 is compressed by the arrangement of the outside sheeting 6 formed by sheets with trapezoidal corrugations, on the panel web 2 and 3, respectively, of the steel panel sheets 1, without with the exception of the fixation members (not shown) direct contact occurring between the outside sheeting 6 and the panel webs 2 and 3 and/or the vertical panel web flanges 4, 4', respectively, In this way, heat and/or cold bridges can be clearly reduced safely and simply.

Fig. 3 again shows the essential elements like Fig. 1. In contrast to the embodiment shown in Fig. 1, the insulation plate 5 in the embodiment shown in Fig. 3 consists of an insulation plate with areas of different solidity and/or bulking density. As can be seen from Fig. 3 without difficulty, in the shown embodiment the area 5a protruding over the horizontal extension of the panel webs 2 and 3 in direction of the facade outside, of the insulation plate 5 is formed as area with increased bulking density of the mineral wool material of the insulation plate 5. As can be seen from Fig. 4, which again essentially shows the same elements as Fig. 3, wherein on the outside of the facade outside sheeting elements 6 preferably in form of sheets with trapezoidal corrugations are arranged, also here compression of the areas of increased stability 5a of the insulation plate 5 occurs during fixation of the outside sheeting elements 6 on the panel webs 2 and 3 and/or the panel web flanges 4, 4', respectively, wherein also the areas 5a of the insulation plate 5 develop a thermal insulation effect. Due to the increased stability of these areas 5a, compression in the areas of the insulation plates 5, protruding over the horizontal extension of the panel webs 2 and 3 is less than in the embodiments of Figs. 1 and 2, wherein also the total stability of the entire facade can be improved, this again affecting resistance of facades of this construction to wind suction forces and the like.

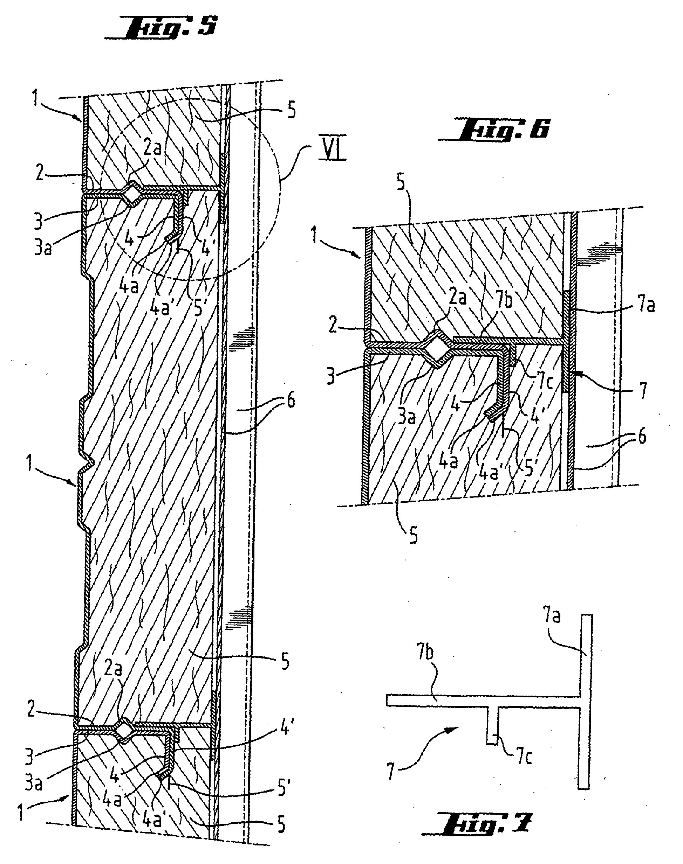

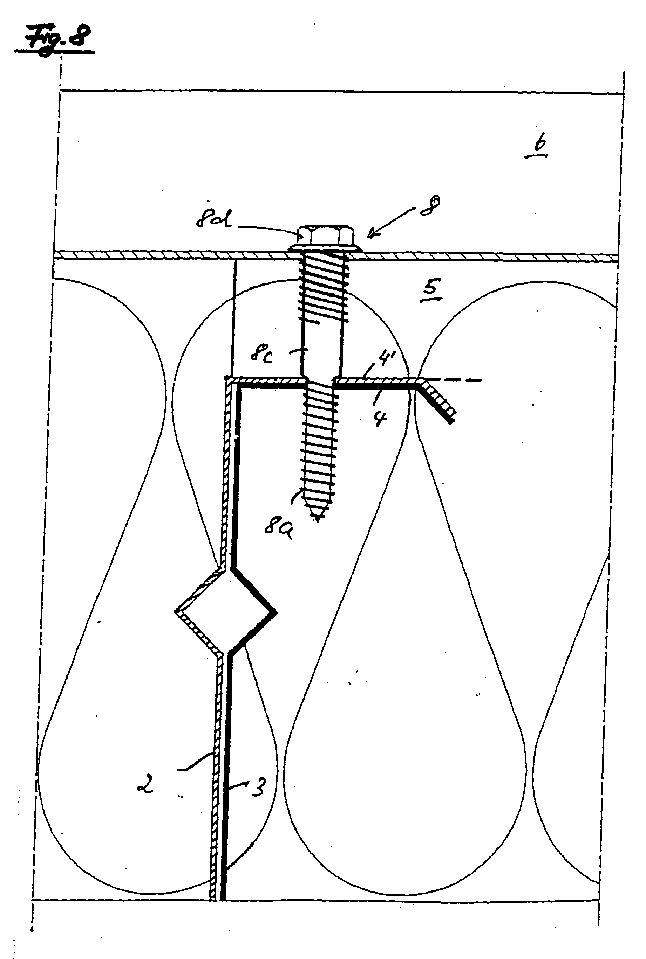

As far as Fig. 5 is concerned, here essentially the embodiment of Fig. 2 with all elements is shown. In contrast thereto, in the embodiment of Fig. 5 one or several spacer profiles 7 which extend, as is also shown in detail in Fig. 6, between the panel web s 2 and 3 as well as the panel web flanges and the outside sheeting elements 6 are provided for fixation of the outside sheeting. Said spacer elements 7 herein preferably are made from a material with low thermal conductivity such that heat bridges also caused by those between outside sheeting elements 6 and the steel panel sheets 1 are reduced substantially, since heat bridges absolutely worsen the total insulation value of the facade construction. As can be taken form Fig. 5, it is possible to provide for such spacer elements 7 only on selected panel webs 2 and 3, depending on static demands to the respective facade. By the spacer elements 7, compression of the areas of the insulation plate 5, protruding externally over the horizontally extending panel webs 2 and 3 can be avoided and/or checked, respectively, and controlled, this again having positive effect on the total insulation value of the facade construction, as under this circumstances a mineral wool of low bulking density, e.g. below 50 kg/m³, in particular in a of 8 to 40 kg/m³, particularly preferable in a range of 8 to 20 kg/m³ can be used.

Fig. 7 finally shows a possible embodiment of the spacer element 7 as profile. The spacer profile of Fig. 7 therein consists of a vertically extending head portion 7a to which the outside sheeting elements 6 are fixed, an area extending horizontally to the inside, which comes to bear on the panel webs 2 and to which this area is fixed, as well as a stop flange 7c protruding vertically downwardly and to the inside of the facade spaced from the vertical head portion 7a of the spacer profile, said stop flange in mounted state bearing on the panel web flange 4' and via the spacing to the head portion 7a of the spacer profile also the compression of the area of the insulation plate 5, protruding to the facade outside can be adjusted.

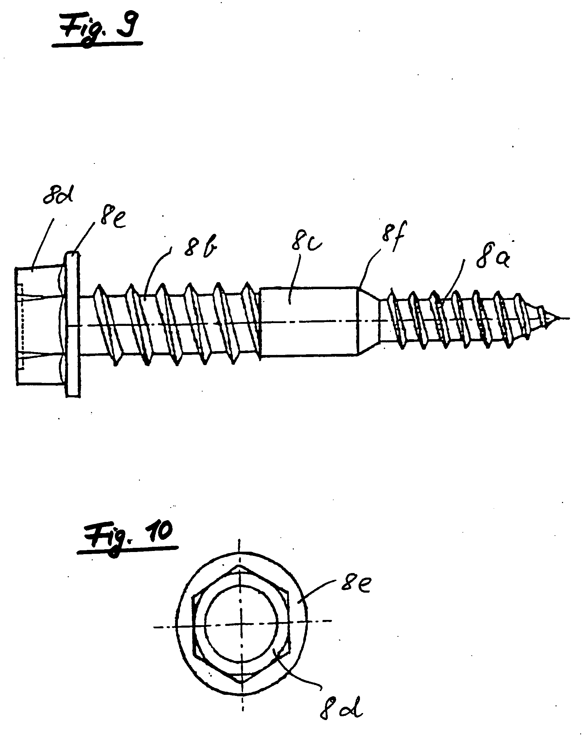

Fig. 8 shows an embodiment in sectional view, in which the outside sheeting elements 6 are connected with the steel panel plate using special screws 8 acting as spacer and fixation elements. The special screw 8 shown in more detail in Figs. 9 and 10 herein with its front screw thread section 8a with screwing engagement reaches into the panel web opposing the external sheeting elements 6, which in the shown embodiment is formed by the mutually overlapping panel webs 2 and 3. In the shown embodiment of Fig. 8 the screw 8 herein extends through a bore in the panel web flanges 4, 4' protruding vertically downwardly, which are in claw-like engagement with the cut 5' in the mineral wool plate 5.

As can be seen from Figs. 9 and 10, the screw in total comprises two screw thread sections 8a and 8b separated from one another by a thread-free section 8c. The screw thread sections 8a and 8b have differently strong thread diameters, the front screw thread section 8a having a smaller diameter than the screw thread section 8b directly following the screw head 8d. Herein it is advantageous that the front thread section 8a is made longer than the screw thread section 8b, preferably 1.5 to 2 times its length. The thread-free section 8c is made thicker than the screw thread section 8a and has an axial length which preferably corresponds to half of the thread length of the thicker screw thread section 8b. The screw head 8d can be embodied as cap bolt head, wherein however also other embodiments are possible, e.g. hexagon socket or the like. For increasing the support surface with respect to the outside sheeting element it is advantageous to provide for a washer 8e to which the sealing material is applied captively. Sealing may also be performed by a separate sealing or washer ring by which a metal to metal contact is avoided. Advantageously, the screw is a self-tapping screw so that no opening must be bored.

By this screw 8 specially adapted to the wall panel, the outside sheeting element 6 which in particular has the shape of a sheet with trapezoidal corrugations is solidly fixed to the steel panel plate 1 keeping a defined distance thereto. Thus, the claimed distance also determining the compression of the mineral wool material between outside sheeting element 6 and steel panel plate 1 is defined by the screw 8. During assembly, the screw 8 independently moves the outside sheeting element 6 to the screw head 8d to bear on the washer 8e, while the front thread section 8a is screwed into the panel web. As can be seen, herein at first the front thread section 8a comes into engagement with the panel web, until the shoulder of the thread-free section 8c touches the panel web, wherein together with screwing-in the outside sheeting element 6 is pulled to the screw head 8d, wherein with the stop of the thread-free shaft section 8c at the panel web the position and the distance, respectively, of the outside sheeting element 6 with respect to the steel panel plate 1 is defined.

## Claims

1. In a wall, for a building facade in particular, with
- wall panels arranged one on top of another, preferably made out of sheet steel, with horizontally protruding panel webs (2, 3), whereas at least a part of said panel webs are provided with a panel web flange (4, 4') which is protruding from the free ends of said panel web (2, 3),
- insulation members, preferably made of mineral wool, which are disposed between said panel webs (2, 3) and held by said web flanges (4, 4'), wherein the thickness of the insulation members is greater than the horizontal extension of the panel webs,
- and with an outside sheeting made of outside sheeting elements (6), preferably in the kind of sheets with trapezoidal corrugations,
- wherein the outside sheeting is fixed at the wall panels with intermediation of the insulation material (5), which is protruding externally over the panel webs (2, 3),
- the use of at least one spacer element (7) for fixation of the outside sheeting element (6), wherein said spacer element (7) is extending between the outside sheeting element (6) and the respective panel web (2, 3), bridging the insulation material (5) protruding externally over the panel webs (2, 3), and which is holding the outside sheeting in a defined distance to he respective panel web (2,3).

2. In a wall according to claim 1, the use of said at least one spacer element (7) to adjust compression of the insulation material with excess thickness to a desired value or to avoid such compression.

3. In a wall according to any of claims 1 or 2, the use of said at least one spacer element (7) to provide fixation points where the insulation layer is not pressure-loaded.

4. Wall according to any of previous claims, **characterised in that** the spacer elements (7) are provided for on selected panel webs (2, 3).

5. Wall according to any of previous claims, **characterised in that** the spacer element (7) is made out of a material with low thermal conductivity.

6. Wall according to any of previous claims, **characterised in that** the spacer element (7) is formed as a profile and particularly consists of a head portion (7a) for fixation of the outside sheeting element (6), an area extending horizontally from the head portion (7a) to the inside for engagement on the panel webs and of a stop flange (7c) for bearing on the panel web flanges.

7. Wall according to any claims 2 to 6, **characterised in that** the compression of the insulation member can be adjusted via the spacing between the stop flange (7c) and the head portion (7a) of the spacer element (7).

8. Wall as defined in any of previous claims, **characterised in that** downwardly protruding web flanges (4, 4') are provided for only in the upper area (3) of the insulation material for fixation of the insulation members.

9. Wall as defined in any of previous claims, **characterised in that** on the marginal edges of the web flanges (4, 4') bevelings (4a, 4a') directed to the facade inside in particular are provided for.

10. Wall as defined in any of previous claims, **characterised in that** the insulation member is provided with a cut (5') without removal of material in the area of engagement of the web flanges (4, 4').

11. Wall as defined in any of previous claims, **characterised in that** the insulation material (5) is formed with areas of different solidity, namely preferably with two or more layers extending perpendicularly to the webs with preferably different bulking density, and that preferably the area protruding over the webs (2, 3) of the insulation material (5) is formed as area of higher stability (5a).

12. Wall as defined in any of previous claims, **characterised in that** the insulation member is in the form of insulating plates.

13. Wall as defined in any of previous claims, **characterised in that** the insulation material is mineral wool and the outside sheeting element (6) is held at a given distance to the web flange by using screws which respectively have a front thread section (8 a) followed by a thread-free section (8c) being of greater diameter forming a stop shoulder (8f), the axial distance of said stop to the screw head (8d) determining the distance of the outside sheeting element (6) to the web flange, which thread-free section is followed by a further thread section (8b) with larger thread than the front thread section (8a), which is followed by the screw head (8d) preferably provided with a washer (8e).

14. Wall according to claim 13, wherein, during assembly, said screw (8) independently moves the outside sheeting element (6) to the screw head (8d) to bear on the washer (8e), while the front thread section (8a) is screwed into the panel web.

15. Wall as defined in one of the preceding claims, **characterised in that** the wall is made of casket-like wall panels.

16. A screw for use in the wall as defined in one of the preceding claims 1 to 15, **characterised in that** the screw (8) has a front thread section (8a) followed by a thread-free section (8c) being of greater diameter and forming a stop shoulder (8f), the axial distance of said stop to the screw head (8d) determining the distance of the outside sheeting element (6) to the web flange, which thread-free section is followed by a further thread section (8b) with larger thread than the front thread section (8a), which is followed by the screw head (8d) preferably provided with a washer (8e).
